(19) Europäisches Patentamt
European Patent Office
Office européen des brevets

(11) EP 1 500 430 A2

(12) **EUROPEAN PATENT APPLICATION**

(43) Date of publication:
**26.01.2005 Bulletin 2005/04**

(51) Int Cl.[7]: **B01J 20/32**

(21) Application number: **04012766.4**

(22) Date of filing: **28.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.05.2003 JP 2003155414**
**26.01.2004 JP 2004016952**

(71) Applicant: **DAICEL CHEMICAL INDUSTRIES, LTD.**
**Sakai-shi, Osaka (JP)**

(72) Inventors:
- **Okamoto, Yoshio**
  **Nagoya-shi Aichi (JP)**
- **Yamamoto, Chiyo**
  **Kasugai-shi Aichi (JP)**
- **Bezhan, Chankvetadze**
  **Tbilish 380028 (GE)**

(74) Representative: **Grünecker, Kinkeldey, Stockmair & Schwanhäusser Anwaltssozietät**
**Maximilianstrasse 58**
**80538 München (DE)**

(54) **Separating agent for optical isomers, method of production thereof, and separation column for optical isomers**

(57) The present invention provides a separating agent for optical isomers having a porous monolithic inorganic type carrier and polysaccharide or a derivative thereof supported on the monolithic inorganic type carrier, and a separation column for optical isomers in which the separating agent for optical isomers is held in a column tube. According to the invention, the separating agent for optical isomers and the separation column for optical isomers which have high asymmetry recognition ability and can be used particularly at a high flow rate when used for the separation of optical isomers is provided.

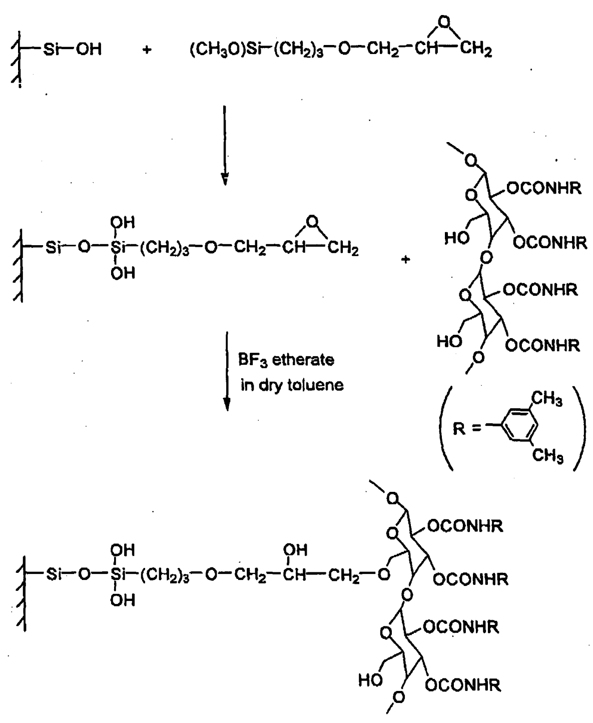


Fig. 1

EP 1 500 430 A2

## Description

BACKGROUND OF THE INVENTION

Field of the Invention

The present invention relates to a separation column for optical isomers, and more particularly to a separation column for optical isomers used for separation of the optical isomers by chromatography. In particular, the invention relates to a separation column for optical isomers which efficiently separates a broad range of compounds in the separation of pharmaceuticals, foods, agricultural chemicals and perfumes.

Description of Related Art

Optical isomers having a relationship of a real image and a mirror image have the same physical and chemical properties such as a boiling point, a melting point, and solubility, but often show differences in interactions for a living matter such as a bioactive including taste and odor. In particular, in the field of pharmaceutical preparations, there are significant differences in an effect of a medicine and toxicity between the two optical isomers. Therefore, in the Guideline for the Production of Pharmaceuticals, the Ministry of Health, Labor and Welfare describes that "when a drug is a racemic modification, it is desirable to preliminarily study absorption, distribution, metabolism and movement of excretion for each isomer".

As stated above, optical isomers have completely the same physical and chemical properties such as a boiling point, a melting point, and solubility, therefore, each optical isomer could not be separated by classical, ordinary separation means and it was not possible to study on interaction of an individual optical isomer with the living matter. Thus, energetic studies have been made on techniques for separating optical isomers in order to analyze a wide variety of optical isomers conveniently with high precision.

And as a separation technique that meets these requirements, an optical resolution method by high performance liquid chromatography (HPLC), in particular an optical resolution method by separation columns for optical isomers for HPLC has progressed. As the separation columns for optical isomers referred to herein, a chiral stationary phase composed of an asymmetry recognition agent itself or a chiral stationary phase composed of an asymmetry recognition agent supported on a suitable carrier is used.

Known examples of the asymmetry recognition agent include optical active triphenylmethyl polymethacrylate (see e.g., JP 57-150432 A), cellulose, amylose derivatives (see, e.g., Okamoto Y., Kawashima M., and Hatada K., J. Am. Chem. Soc., 106:5337, 1984), and ovomucoid which is protein (see e.g., JP 63-307829 A).

Meanwhile, in a column configured by filling a particulate inorganic type filler such as silica gel into a tube, resistance to flow of fluid is first increased and thus pressure drop is increased. Consequently, a flow per unit time period is reduced, and a long time is required for the separation when used as chromatography. Additionally, since the flow per unit time period is small, productivity per unit time period is small, and generally it has not been adequate to mass production of separation subjects.

As a column to dissolve this drawback, a column made up of an monolithic inorganic type porous body (see e.g., JP 6-265534 A) has been known. As a method of producing such a column made up of an monolithic inorganic type porous body, the method of sealing a space between the inorganic type porous body and a column tube by softening plastic or glass with heat has been known (see e.g., WO 02/505005 A1). Moreover, a separation column for optical isomers where cyclodextrin as an asymmetry recognition agent is chemically bound to an monolithic inorganic type porous body has been known (see e.g., WO 00/515627 A1).

However, in the manufacture of currently known separation columns for optical isomers using the monolithic inorganic type porous body, there are some cases where reactivity of the monolithic inorganic type porous body with the asymmetry recognition agent is low. Besides, there are some cases where the asymmetry recognition agent chemically bound to the monolithic inorganic type porous body is decomposed at the manufacture of columns. Depending on conditions of the column manufacture, the asymmetry recognition agent used is sometimes limited and there are some cases where the column cannot be applied to a broad range of optical isomers.

There have been problems described above in the manufacture of the separation columns for optical isomers, and tasks still remain for practical application thereof.

SUMMARY OF THE INVENTION

It is an object of the invention to provide a separating agent for optical isomers which has high asymmetry recognition ability and can be used particularly at a high flow rate when used for the separation of the optical isomers, and a separation column for optical isomers having the same.

As a result of an intensive study on a separating agent for optical isomers having characteristic asymmetry recognition ability, the inventors of the present invention have accomplished the present invention.

That is, the present invention is a separating agent for optical isomers which is used for separation of optical isomers in a sample, comprising:

an monolithic inorganic type carrier that is porous; and
at least one of a polysaccharide and a polysaccharide derivative supported on the monolithic inorganic type carrier.

Further, the present invention provides a method of producing a separating agent for optical isomers which is used for separation of optical isomers in a sample and comprises: an monolithic inorganic type carrier that is porous; and at least one of polysaccharide and a polysaccharide derivative supported on the monolithic inorganic type carrier, the method comprising the steps of:

filling a solution of polysaccharides comprising the at least one of the polysaccharide and the polysaccharide derivative and a solvent into the monolithic inorganic type carrier; and
at least one of distilling off the solvent from the monolithic inorganic type carrier filled with the solution and replacing the solvent with another solvent therein.

Further, the present invention provides a separation column for optical isomers, comprising:

a column tube; and
the above-mentioned separating agent for optical isomers which is held in the column tube.

According to the invention, as supporting polysaccharide or a derivative thereof on a porous monolithic inorganic type carrier, it is possible to obtain a separation agent for optical isomers in which pressure drop is reduced while facilitating manufacture and handling, a contact area with a sample fluid is increased per unit area and asymmetry recognition ability is high when used for the separation of the optical isomers, and to obtain a separation column for optical isomers which can be used at a high flow rate in the separation, analysis and fractionation of a broad range of the optical isomers.

## BRIEF DESCRIPTION OF THE DRAWINGS

Fig. 1 is a diagram showing reaction formulae in respect to generation of columns in Examples 2 to 4.
Fig. 2 is a diagram showing chromatographs when optical isomers represented by a structural formula (2) were separated by high-performance liquid chromatography using respective columns in Examples 5 to 7.
Fig. 3 is a diagram showing chromatographs when optical isomers represented by a structural formula (3) were separated by high-performance liquid chromatography using the respective columns in Examples 5 to 7.
Fig. 4 is a diagram showing chromatographs when optical isomers represented by a structural formula (4) were separated by high-performance liquid chromatography using the respective columns in Examples 5 to 7.
Fig. 5 is a diagram showing chromatographs when optical isomers represented by a structural formula (5) were separated by high-performance liquid chromatography using the respective columns in Examples 5 to 7.
Fig. 6 is a diagram showing chromatographs when optical isomers represented by a structural formula (6) were separated by high-performance liquid chromatography using the respective columns in Examples 5 to 7.
Fig. 7 is a diagram showing chromatographs when optical isomers represented by a structural formula (7) were separated by high-performance liquid chromatography using the respective columns in Examples 5 to 7.
Fig. 8 is a diagram showing chromatographs when optical isomers represented by a structural formula (8) were separated by high-performance liquid chromatography using the respective columns in Examples 5 to 7.

## DETAILED DESCRIPTION OF THE PREFERRED EMBODIMENT

Hereinafter, an embodiment of the invention is illustrated in detail.

The separating agent for optical isomers of the invention has a porous monolithic inorganic type carrier and polysaccharide or a derivative thereof supported on this monolithic inorganic type carrier. In the invention, the polysaccharide or the derivative thereof may be directly supported on the monolithic inorganic type carrier, or may be supported through another compound which is appropriate.

The monolithic inorganic type carrier is a generally columnar inorganic type porous body which can be held

in a column tube, and is different from a particulate carrier filled in the column tube.

The monolithic inorganic type carrier preferably contains silica as a major ingredient, but may be comprised of another inorganic material and may contain a small amount of an organic material. When silica is the major ingredient, it is desirable that surface treatment is given to the monolithic inorganic type carrier in order to exclude an effect of a residual silanol group, but there is no problem even if the surface treatment is not given.

A known inorganic type carrier or an improved article thereof can be used for the monolithic inorganic type carrier. For example, it is possible to use porous shaped bodies described in WO 00/515627 A1, monolithic adsorbents described in WO 02/505005 A1, and inorganic type porous columns described in JP 6-265534 A, and the like.

The monolithic inorganic type carrier can be made by known methods and methods according thereto. The monolithic inorganic type carrier can be manufactured by, for example, a sol-gel method where a structure with a solvent rich phase which becomes a huge void is caused by using metal alkoxide as a starting material and adding an appropriate coexisting substance such as a polymer such as polyoxyethylene which dissolves in a solvent to the material as described in JP 7-41374 A.

A fine pore size of the monolithic inorganic type carrier can be adjusted by immersing in an acid or basic aqueous solution after solidification of a product from the sol-gel method.

The monolithic inorganic type carrier has a three dimensional meshed continuous hole having a diameter of 500 nm or more and fine pores formed in an inner wall face of this hole. A pore size of the hole is preferably 500 nm or more, and more preferably 1000 nm or more. The pore size of the fine pore is preferably from 5 to 100 nm, more preferably from 5 to 80 nm, and still preferably from 5 to 50 nm.

The polysaccharide may be any of synthetic polysaccharide, naturally occurring polysaccharide and naturally occurring modified polysaccharide, and may be any polysaccharide so long as it is optically active, but those with high regularity of binding manner are preferable, and chain-shaped ones are also preferable.

Examples of the polysaccharide include: β-1,4-glucan (cellulose), α-1,4-glucan (amylose or amylopectin), α-1,6-glucan (dextran), β-1,6-glucan (pustulan), β-1,3-glucan (such as curdlan and schizophyllan), α-1,3-glucan, β-1,2-glucan (Crown Gall polysaccharide), β-1,4-galactan, β-1,4-mannan, α-1,6-mannan, β-1,2-fructan (inulin), β-2,6-fructan (levan), β-1,4-xylan, β-1,3-xylan, β-1,4-chitosan, α-1,4-N-acetylchitosan (chitin), pullulan, agarose, and alginic acid. Also, starches containing amylose are included therein.

Of those, it is preferable to use those which can be easily obtained as highly pure polysaccharides such as cellulose, amylose, β-1,4-xylan, β-1,4-chitosan, chitin, β-1,4-mannan, inulin, and curdlan, and more preferably cellulose and amylose.

It is preferred that such a polysaccharide has a number-average degree of polymerization (i.e., the average number of pyranose or furanose rings per molecule) of 5 or more, and more preferably of 10 or more. From the viewpoint of easy handling, it is preferred that the number-average degree of polymerization is 1,000 or less, although the upper limit thereof is not particularly limited. Particularly, it is preferred that a number-average degree of polymerization of polysaccharide is from 50 to 400 in that the polysaccharide or the derivative thereof is supported on the inner wall face of the monolithic inorganic type carrier having fine pores and a sufficient separation effect of the optical isomers is obtained.

The polysaccharide derivative is not particularly limited so long as it is the polysaccharide derivative which can be used for the separation of optical isomers. Such polysaccharide derivatives include, for example, polysaccharide derivatives which contain optical active polysaccharide as a skeleton and where at least a part of a hydroxyl group and an amino group which this polysaccharide has is substituted with a functional group which acts on an optical isomer in a sample.

The functional group is a functional group which acts on the optical isomer in the sample containing the optical isomers which are subject to the separation. Actions of the functional group for the optical isomer cannot be collectively defined because a type of the functional group is different depending on a type of the optical isomers which are subject to the separation, but they are not particularly limited so long as they are the actions sufficient to perform optical resolution of the optical isomers by the polysaccharide derivatives. Such actions include affiliative interactions such as hydrogen bond, $\pi$ - $\pi$ interaction and dipole-dipole interaction of the optical isomer with the functional group, and non-affiliative interaction such as steric hindrance.

By such interactions, it is believed that when a pair of the optical isomers gets close to the polysaccharide derivative, a direction of the optical isomer can be arranged without disturbing access of at least one or the optical isomers to the polysaccharide derivative or a higher structure of the polysaccharide derivative itself can be arranged in a shape favorable for asymmetry recognition.

The functional group is selected depending on the type of the optical isomers which are subject to the separation. The functional groups include groups including aromatic groups which are bound to the polysaccharide, for example via ester bond, urethane bond and ether bond and which may have substituents. The aromatic groups include heterocyclic rings and condensed rings. Substituents which the aromatic group may have include, for example, alkyl groups with up to about 8 carbons, halogen, amino groups, and alkoxy groups.

A substitution degree and an allocation of the functional group in the polysaccharide derivative are not particularly limited, and are appropriately selected depending on the types of the functional group and polysaccharide. For example, it is preferable that the substitution degree is in a range of 80 to 100 % to all of the hydroxyl groups and amino groups of the polysaccharide in order to perform good optical resolution of the optical isomers.

The polysaccharide derivative can be made by known methods. The polysaccharide derivative can be made, for example, by making a compound capable of reacting with a hydroxyl group or amino group contained in the polysaccharide, which includes the functional group or becomes the functional group by a reaction with the hydroxyl or amino group, to react with the polysaccharide by a dehydration reaction.

From the viewpoint of realizing the separation of a broad range of optical isomers, it is particularly preferred that the polysaccharide derivative is a carbamate derivative of polysaccharide or an ester derivative of polysaccharide as described in, for example, WO 95/23125 A1 and the like.

The polysaccharide or the derivative thereof can be supported on the monolithic inorganic type carrier by distilling off a solvent from the monolithic inorganic type carrier filled with a solution of polysaccharide which contains the polysaccharide or the derivative thereof and the solvent, or replacing the solvent with another solvent, or performing both distilling off the solvent and replacing the solvent with the other solvent. The term "supported" referred to herein includes a direct or indirect physical adsorption of the monolithic inorganic type carrier with the polysaccharide or the derivative thereof, and a direct or indirect chemical bond of the monolithic inorganic type carrier with the polysaccharide or the derivative thereof.

When both distilling off the solvent and replacing the solvent with the other solvent are performed, the solvent may be distilled off to some extent and subsequently the remaining solvent may be replaced with the other solvent, or the solvent may be replaced with the other solvent and subsequently the remaining solvent may be distilled off.

As the solvent (good solvent) used for dissolution of the polysaccharide or the derivative thereof, any organic solvents typically used may be used so long as they can dissolve the polysaccharide or the derivative thereof.

Examples of the solvent include: as ketone based solvents, acetone, ethylmethylketone, andacetophenone; as ester based solvents, ethyl acetate, methyl acetate, propyl acetate, methyl propionate, methyl benzoate, and phenyl acetate; as ether based solvents, tetrahydrofuran, 1,4-dioxane, diethylether, and tert-butylmethylether; as amide based solvents, N,N-dimethylformamide and N,N-dimethylacetamide; as imide based solvents, N,N-dimethylimidazolidinone; as halogen based solvents, chloroform, methylene chloride, carbon tetrachloride, and 1,2-dichloroethane; as hydrocarbon based solvents, pentane, petroleum ether, hexane, heptane, octane, benzene, toluene, xylene, and mesitylene; as urea based solvents, tetramethyl urea; as alcohol based solvents, methanol, ethanol, propanol, and butanol; as acid based solvents, acetic acid, trifluoroacetic acid, formic acid, phenol, and catechol; and as amine based solvents, diethylamine, triethylamine, andpyridine. These solvents may be used alone or in mixture with multiple types.

The other solvent (poor solvent) is not particularly limited so long as it is a solvent which replaces the solvent from the solution of polysaccharides, but is preferably a solvent which replaces in favor of the solvent from the solution of the polysaccharides. As such another solvent, a solvent which is insoluble or poorly soluble for the polysaccharide or the derivative thereof is preferable, and can be appropriately selected from known solvents depending on conditions such as solubility for the polysaccharide or the derivative thereof and compatibility with the above solvent.

Supercritical fluid can be used as a solvent which dissolves the polysaccharide and the derivative thereof. The supercritical fluid referred to herein is referred to fluid at a supercritical temperature and/or pressure at which gas and liquid can coexist or above. As this supercritical fluid, it is preferable to use carbon dioxide, nitrogen monoxide, ammonia, sulfur dioxide, hydrogen halids, hydrogen sulfide, methane, ethane, propane, ethylene, propylene, halogenated hydrocarbon, and the like, and carbon dioxide is more preferable.

An organic solvent can be added to the supercritical fluid. As this organic solvent, it is preferable to use alcohols such as ethanol, methanol and 2-propanol; organic acids such as acetic acid and propionic acid; amines such as diethylamine; aldehydes such as acetaldehyde; and ethers such as tetrahydrofuran and ethyl ether. An addition amount of the organic solvent is preferably from 1 to 50%, more preferably from 1 to 35%, and still preferably from 1 to 20% based on the supercritical fluid.

When filling the solution of polysaccharides into the monolithic inorganic type carrier, a concentration of the solvent is from 1 to 100 parts by mass, preferably from 1 to 50 parts by mass, and more preferably from 1 to 20 parts by mass based on 1 part by mass of the polysaccharide or the derivative thereof. The concentration of the solvent can be appropriately determined depending on various conditions such as a type of solute (polysaccharide or polysaccharide derivative), type of solvent (good solvent), and viscosity of the resultant solution and mechanical strength of the monolithic inorganic type carrier.

It is preferred that the concentration of the polysaccharide or the derivative thereof in the solvent is higher from the viewpoint of improvement of separation ability of obtained colums, simplification of column manufacture process, and the like.

The separating agent for optical isomers of the invention can be manufactured by a method including the steps of filling the solution of polysaccharides into the monolithic inorganic type carrier, and at least one of distilling off

the solvent from the monolithic inorganic type carrier in which the solution is filled and replacing the solvent with the other solvent in the monolithic inorganic type carrier in which the solution is filled.

The step of filling the solution of polysaccharides into the monolithic inorganic type carrier includes a method of directly immersing the monolithic inorganic type carrier in the solution of polysaccharides and a method of passing the solution of polysaccharides through the monolithic inorganic type carrier with pressure.

It is preferred that the step of filling the solution of polysaccharides into the monolithic inorganic type carrier is performed under pressure. The pressure at that time is preferably from 50 to 400 bar, more preferably from 50 to 200 bar, and still preferably from 80 to 150 bar.

A method of applying pressure to the solution toward the monolithic inorganic type carrier is not particularly limited, and includes the application of pressure by high pressure gas from a bomb or a compressor, the application of pressure by pistons, and the application of pressure by a high pressure pump of a high-performance liquid chromatography apparatus.

As the step of distilling off the solvent from the monolithic inorganic type carrier in which the solution is filled, an appropriate method is selected depending on the type of the solution. Such a method includes, for example, drying under normal pressure and drying under reduced pressure. In the invention, such methods may be used alone or in combination.

The step of replacing the solvent with another solvent in the monolithic inorganic type carrier in which the solution is filled includes a method of directly immersing the monolithic inorganic type carrier in which the solution is filled in the other solvent and a method of passing the other solvent through the monolithic inorganic type carrier with pressure, similarly to the step of filling the solution of polysaccharides into the monolithic inorganic type carrier.

When the step of filling the solution of polysaccharides into the monolithic inorganic type carrier, and the step of at least one of distilling off the solvent from the monolithic inorganic type carrier in which the solution is filled and replacing the solvent with the other solvent therein are made into one step of supporting the polysaccharide or the derivative thereof on the monolithic inorganic type carrier, the support of the polysaccharide or the derivative thereof on the monolithic inorganic type carrier may be performed at one step or may be repeatedly performed at multiple steps, but it is preferred that it is performed at preferably from 1 to 5 steps, more preferably from 1 to 3 steps, and still preferably 1 step from the viewpoint of the improvement of separation ability of the resultant column, simplification of column manufacture process, and the like.

The separating agent for optical isomers of the invention may perform stronger fixation of the polysaccharide or the derivative thereof on the monolithic inorganic type carrier by forming further chemical bonds by chemical bonds between the monolithic inorganic type carrier and the polysaccharide or the derivative thereof, chemical bonds between the polysaccharides or the derivatives thereof on the monolithic inorganic type carrier, chemical bonds using a third component, reactions by photo irradiation, irradiation of radioactive rays such as $\gamma$-rays, and irradiation of electromagnetic waves such as microwaves to the polysaccharide or the derivative thereof on the monolithic inorganic type carrier, radical reactions, and the like. According to such strong fixation, when used for the separation of the optical isomers, further improvement of availability in industries is anticipated in the separation, analysis and fractionation etc. of the optical isomers.

Examples of a method of fixing the polysaccharide or the derivative thereof on the monolithic inorganic type carrier by the chemical bond include, a method including the steps of binding the monolithic inorganic type carrier to a binder which is fixed on the surface of this monolithic inorganic type carrier by the chemical bond, accreting the polysaccharide or the derivative thereof to the monolithic inorganic type carrier to which the binder is bound, and directly or indirectly binding the accreting polysaccharide or derivative thereof with the binder.

This method may further include the step of introducing substituents into the polysaccharide or the derivative thereof which binds to the binder. In the case of including such a step, it is possible to regulate a substitution ratio of the substituent in the polysaccharide derivative. In the case of including the step, it is also become possible to bind the polysaccharide to the binder and introduce the substituent including the functional group into the polysaccharide which binds to the binder.

The binder is not particularly limited so long as it is a compound which is fixed to the surface of the monolithic inorganic type carrier by the chemical bond and can further chemically bind to the polysaccharide or the derivative thereof. Also, the binder and the polysaccharide or the derivative thereof may be directly bound chemically, or indirectly bound chemically via another compound such as a crosslinking agent. The binder is appropriately selected depending on a composition of the surface of the monolithic inorganic type carrier, and the preferable binders include, for example, organic silicon compounds such as silane coupling agents.

The separation column for optical isomers of the invention has a column tube and the separating agent for optical isomers held in this column tube.

As the column tube, the column tube typically used can be used depending on a use form of the column and a scale of the column.

The separating agent for optical isomers is held in the column tube to become a channel for fluid within the

column tube. A method of holding the separating agent for optical isomers in the column tube is not particularly limited so long as it is the method capable of sealing space between an inner wall face of the column tube and a surface opposite thereto of the separating agent for optical isomers. Known methods can be used in which the monolithic inorganic type carrier is held in the column tube.

As such a method, for example, as disclosed in WO 02/505005 A1, it is possible to use a method of sealing the space between the inner wall face of the column tube and the surface opposite thereto of the monolithic inorganic type carrier by plastic, and the like.

The separation column for optical isomers of the invention may be manufactured by holding the separating agent for optical isomers in the column tube, or may be manufactured by supporting the polysaccharide or the derivative thereof by the aforementioned steps on the monolithic inorganic type carrier of the column having the monolithic inorganic type carrier held in the column tube to become a channel of fluid within the column tube.

The method of supporting the polysaccharide or the derivative thereof in the column having the monolithic inorganic type carrier is preferable from the viewpoint of prevention of decomposition of the supported polysaccharide or derivative thereof, ease of the manufacture, and the like. As the column which holds the monolithic inorganic type carrier in the column tube to become the channel of fluid within the column tube, for example, Chromolith (registered trademark of MERCK & Co., Inc.) can be used.

The separation column for optical isomers of the invention is generally used for chromatography methods such as gas chromatography, high-performance liquid chromatography, supercritical chromatography, thin layer chromatography, and capillary electrophoresis. In particular, it is preferable to apply the separation column to the high-performance liquid chromatography method.

## EXAMPLES

The present invention is described below in more detail based on examples, but the invention is not limited to the following examples.

### Example 1

Production of monolithic inorganic type porous body column on which cellulose tris(3,5-dimethylphenylcarbamate) is supported

(1) Synthesis of cellulose tris(3,5-dimethylphenylcarbamate)

Under a nitrogen atmosphere, 10 g of cellulose and 68.1 g of 3,5-dimethylphenylisocyanate (2.5 equivalents based on all hydroxyl groups which cellulose has) were heated and stirred in 300 ml of dried pyridine at 100°C for 48 hours, and subsequently poured into 3 L of methanol. Precipitated solids were filtrated with a glass filter, washed with methanol several times, and then dried under vacuum. Consequently, 34 g of yellowish white solid was given.

(2) Support of cellulose tris(3,5-dimethylphenylcarbamate) onto monolithic inorganic type porous body

Cellulose tris(3,5-dimethylphenylcarbamate) synthesized in the above (1) was dissolved in acetone. A solution concentration at that time was 150 mg/ml. This solution was centrifuged by a centrifuge (3,000 rpm) for 20 min.

As an monolithic inorganic type porous body, Chromolith (registered trademark of Merck & Co., Inc.) Speed ROD RP-18e column (50 mm in length x 4.6 mm in internal diameter) available from Merck & Co., Inc., which is an monolithic inorganic type porous body column was used. A column (50 mm in length x 4. 6 mm in internal diameter) filled with the above solution and the monolithic inorganic type porous body column (50 mm in length x 4.6 mm in internal diameter) were linked through a capillary column made from stainless steel (30 mm in length x 1 mm in internal diameter).

A pressure of 90 to 100 bar was applied from an end opposite to a connection end with the capillary column in the column filled with the solution by a nitrogen bomb having an appropriate reducing valve. It was confirmed that the above solution containing a polysaccharide derivative was dripped from a terminal of the inorganic type porous body column (an end opposite to a connection end with the capillary column in the inorganic type porous body column), and subsequently the pressure was released. Both ends of the inorganic type porous body column were opened and the inorganic type porous body column was dried under ordinary temperature and ordinary pressure for about 10 hours, and then dried under reduced pressure for 2 hours. A terminal point of a drying step was determined by measuring a weight of the inorganic type porous body column before and after drying.

Comparative Example 1

(1) Production of filler where cellulose tris (3,5-dimethylphenylcarbamate) is supported on particulate silica gel

Cellulose tris(3,5-dimethylphenylcarbamate) (16 g) obtained in (1) of Example 1 was dissolved in 320 ml of acetone to obtain a polymer dope. The polymer dope was uniformly applied on 64 g of porous silica gel (particle size: 5 µm) treated with aminopropylsilane through the reaction with 3-aminopropyltriethoxysilane by a known method. The objective filler where cellulose tris(3,5-dimethylphenylcarbamate) was supported on particulate silica gel was obtained by distilling it off under reduced pressure after the application.

(2) Production of packed column using filler where cellulose tris(3,5-dimethylphenylcarbamate) is supported on particulate silica gel

The filler manufactured in (1) was packed into a column made of stainless steel with a length of 50 mm and an internal diameter of 4.6 mm by a slurry method to obtain the obj ective packed column using the filler where cellulose tris(3,5-ditnethylphenylcarbamate) was supported on particulate silica gel.

Application Example 1

Using the inorganic type porous body column manufactured in Example 1 and the packed column manufactured in Comparative Example 1, the separation of optical isomers was performed by high-performance liquid chromatography, and a retention time of each column and column properties were measured. Results of measurement are shown in Table 1.

Table 1

| Flow rate (ml/min) | Example 1 | | | Comparative Example 1 | | |
|---|---|---|---|---|---|---|
| | t1 | t2 | Back pressure (kg) | t1 | t2 | Back pressure (kg) |
| 1.0 | 1.60 | 3.60 | 1 | 2.00 | 4.78 | 5 |
| 2.0 | 0.81 | 1.78 | 5 | 1.01 | 2.38 | 15 |
| 3.0 | 0.56 | 1.21 | 10 | 0.69 | 1.60 | 25 |
| 4.0 | 0.43 | 0.91 | 17 | 0.53 | 1.20 | 37 |
| 5.0 | 0.35 | 0.74 | 24 | 0.48 | 0.95 | 49 |

As apparent from Table 1, the inorganic type porous body column manufactured in Example 1 enables lower pressure drop and shorter analysis time and is more excellent in column property, and is equivalent in asymmetry recognition ability to the packed column manufactured in Comparative Example 1.

Example 2

Chromolith (registered trademark of Merck &-Co., Inc.) Performance 100 mm x 4.6 mm Si (batch No. UM2069, rod No. UM2069/058) which was an monolithic inorganic type porous body column was cut into two portions each having a length of 50 mm. A cut column was washed with 20 ml of acetone, and dried under reduced pressure at 60°C overnight. A weight of this column without end-fitting after drying treatment was 2.5207 g.

The column after drying was washed with a solution of 10% (v/v) γ-glycidoxypropyltrimethoxysilane in chloroform which was a silane coupling agent for 20 min, after which both ends of this column were sealed, and left overnight (12 hours) at room temperature. The chloroform solution was discharged from the column, and the column was dried again under reduced pressure at 60°C for 3 hours. The weight of the column after this treatment was 2.5507 g. This means that 36.3 mg of the silane coupling agent was bound to the silica gel of the column.

The column to which the silane coupling agent was bound was filled with a 100 mg/ml acetone solution of cellulose-3,5-dimethylphenylcarbamate where 30% of hydroxyl group at position 6 was unreacted. This column was left at room temperature without fitting the end-fitting in order to volatilize acetone. Then, this column was dried under reduced pressure at 40°C for 12 hours. The weight of the column after this treatment was 2.5624 g. This means that about 73.2 mg of the aforementioned cellulose derivative was absorbed to the column.

Optical selectivity was examined for this column using some chiral analytes, and it has been confirmed that

this column has separation ability of optical isomers.

Example 3

The column obtained in Example 2 was filled with a solution of 10% boron trifluoride etherate in dried toluene, both ends were sealed in order to prevent volatilization of reagents from the column, and the column was left overnight at room temperature. After this treatment, 50 ml of acetone was passed through the column to eliminate the unimmobilized cellulose derivative, and this column was dried under reduced pressure at 60°C for 12 hours. An amount of the cellulose derivative washed out from the column was 23 mg. Accordingly, 50.7 mg of the cellulose derivative was immobilized to the column, and a support amount of the cellulose in the column is to be from 16.8% to 16.9% based on the weight of monolithic silica (250 mg) in the column, which is published by a manufacturer of the column.
Optical selectivity was examined for this column using some chiral analytes, and it has been confirmed that this column has separation ability of optical isomers.

Example 4

The column obtained in Example 3 was filled with a solution in which 300 µl of 3,5-dimethylphenylisocyanate was dissolved in 700 µl of pyridine, and both ends of the column were sealed to leave the resultant at 80°C for 12 hours. Subsequently, the column was washed with pyridine and methanol to eliminate unreacted isocyanate, and dried in a dryer with reduced pressure at 80°C for 12 hours. A weight of the resultant column was increased by 22 mg relative to that before the reaction.
Optical selectivity was examined for this column using some chiral analytes, and it has been confirmed that this column has separation ability of optical isomers.
Reaction formulae in respect to production of the columns in Examples 2 to 4 are shown in Fig. 1. Test results of optical selectivity of the columns in this example are shown in Tables 2 and 3 below.

Table 2

| Chiral analytes | t1' (min) | t'2 (min) | k1' (-) | k2' (-) | α (-) | N1 (-) | N2 (-) | Rs (-) |
|---|---|---|---|---|---|---|---|---|
| Benzoin | 7.00 | 8.00 | 3.38 | 4.00 | 1.19 | 1410 | 1540 | 1.1 |
| Cobalt acetoacetonate | 3.80 | 4.28 | 1.13 | 1.68 | 1.48 | 1400 | 1300 | 0.9 |
| 2,2'-Dihydroxy-6,6'-dimethylbiphenyl | 6.00 | 16.40 | 2.94 | 9.79 | 3.33 | 1250 | 910 | 6.2 |
| Flavanone | 4.00 | 4.40 | 1.50 | 1.75 | 1.17 | ---- | ---- | ---- |
| 2-Phenylcyclohexanone | 3.05 | 3.33 | 0.60 | 0.75 | 1.25 | 1100 | 1080 | 0.8 |
| 2,2,2-Trifluoro-1-(9-antryl)ethanol | 4.30 | 6.30 | 1.69 | 2.94 | 1.74 | 1520 | 1400 | 3.0 |
| 2-Tritylethanol | 4.52 | 5.00 | 1.82 | 2.13 | 1.17 | 1170 | 1080 | 0.8 |
| Troger'sbase | 3.80 | 4.52 | 1.13 | 1.82 | 1.61 | 1025 | 980 | 1.0 |

Table 3

| Chiral analytes | k1' (-) | k2' (-) | α (-) |
|---|---|---|---|
| 2,2'-Dihydroxy-6,6'-dimethylbiphenyl | 5.90 | 12.10 | 2.05 |
| Troger's base | 1.21 | 1.62 | 1.34 |

Table 2 shows test results of optical selectivity of test racemic analytes of the column where 16.7% by mass of cellulose 3,5-dimethylphenylcarbamate was covalently fixed to the monolithic inorganic type porous body column. In this test, a mixed solvent where n-hexane and 2-propanol were mixed at a volume ratio of 95:5 was used for a mobile phase, and this mobile phase was allowed to flow at a flow rate of 0.5 ml/min.
Table 3 shows test results of optical selectivity of the above column when a mixed solvent where n-hexane, chloroform, and 2-propanol were mixed at a volume ratio of 90:10:1 was used for the mobile phase.
In Tables 2 and 3, characters are defined as follows.
"t(t')" denotes a detection time of the optical isomer. "k' " denotes a volume ratio of the optical isomers. The volume ratio is found by the following formula (1). "α" denotes a separation factor. The separation factor is a ratio of

k2' to K1'. "N" denotes a theoretical plate number. The theoretical plate number is found by the following formula (2). "Rs" denotes a resolution. The resolution is found by the following formula (3). "1" denotes an optical isomer weakly absorbed by the column, whereas "2" denotes an optical isomer strongly absorbed by the column.

$$\text{Volume ratio } (k') = (tr - t0)/t0 \qquad (1)$$

(wherein tr denotes a retention time of an optical isomer, and t0 denotes a time period from injection of a sample to detection of a solvent(dead time).)

$$\text{Theoretical plate number } (N) = 16 \times (tr/W)^2 \qquad (2)$$

(wherein tr denotes a retention time of an optical isomer, and W denotes a peak width that is a distance (time) between intersecting points of tangent lines drawn at points of inflection at right and heft of a peak and a baseline.)

$$\text{Resolution } (Rs) = 2 \times L/W \qquad (3)$$

(wherein L denotes a distance between peaks of both optical isomers, and W denotes the sum of band widths of both peaks.)

Examples 5 to 7

Production of monolithic inorganic type porous body column where amylose tris(3,5-dimethylphenylcarbamate) is supported on

(1) Synthesis of amylose tris(3,5-dimethylphenylcarbamate)

Under a nitrogen atmosphere, 10 g of amylose and 82.2 g of 3,5-dimethylphenylisocyanate (3.0 equivalents based on all hydroxyl groups which amylose has) were heated and stirred in 300 ml of dried pyridine at reflux temperature for 48 hours, and subsequently poured into 5 L of methanol. Precipitated solids were filtrated with a glass filter, washed with methanol several times, and then dried under vacuum. Consequently, 36.1 g of yellowish white solid was given.

(2) Support of amylose tris(3,5-dimethylphenylcarbamate) onto monolithic inorganic type porous body

Amylose tris(3,5-dimethylphenylcarbamate) synthesized in the above (1) was dissolved in ethyl acetate to prepare a solution (dope) of amylose tris(3,5-dimethylphenylcarbamate) in ethyl acetate. For the dope, solutions were prepared in which concentrations of amylose tris(3,5-dimethylphenylcarbamate) were 50 mg/ml, 75 mg/ml and 100 mg/ml, respectively. Those solutions were injected with pressure into Chromolith (registered trademark of Merck & Co., Inc.) Speed ROD RP-18e column (50 mm in length x 4.6 mm in internal diameter) available from Merck & Co., Inc. described above.

In this example, ethyl acetate was chosen as a good solvent for two major reasons, i.e., (1) viscosity of the solution of amylose tris(3,5-dimethylphenylcarbamate) in ethyl acetate is relatively low compared to the other solvents, and (2) stability of PEEK membrane which seals the space between the monolithic inorganic type porous body and a column tube in the column is high for ethyl acetate.

Injecting of the solution with pressure was performed by connecting one end of the column to a high pressure pump used for a high-performance liquid chromatography apparatus, pumping the solution to the column by the high pressure pump, and stopping pumping of the solution by the high pressure pump immediately after the solution dripped from the other end of the column. A flow rate at the time of the pumping of the solution was appropriately set within the range where a back pressure of the column at the time of the pumping did not exceed 200 bars.

A setting value (200 bar) of the back pressure of the column at the time of the pumping of the solution was determined from the viewpoint of retaining seal of the PEEK membrane.

Subsequently, the column was removed, left in a fume hood at ordinary temperature in a state where end-fittings of both ends were removed until a column mass became constant (about one week), and then, dried under reduced pressure at 40°C for 3 to 4 hours.

By these manipulations, the column (Example 5) manufactured by once injecting with pressure the solution where the concentration of amylose tris(3,5-dimethylphenylcarbamate) was 50 mg/ml into the column, the column (Example 6) manufactured by once injecting with pressure the solution where the concentration was 75 mg/ml into the column, and the column (Example 7) manufactured by once injecting with pressure the solution where the concentration was 100 mg/ml into the column were obtained, respectively.

By using mixtures of each of optical isomers represented by the following structural formulae (1) to (8) as samples, optical resolution ability of the columns in Examples 5 to 7 were analyzed by high-performance liquid chromatography.

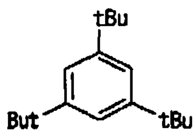
1
tri-tert -butylbenzene

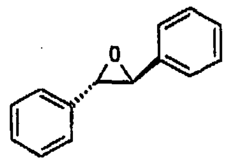
2
trans-stilbene oxide (t-SO)

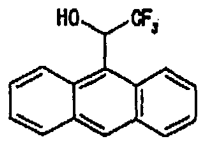
3
2,2,2-trifluoro-1-(9-anthryl)ethanol (TFAE)

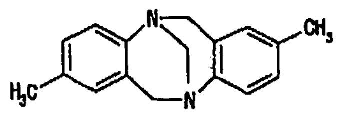
4
Troger's Base (TR-base)

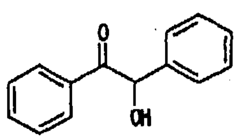
5
benzoin (Bz)

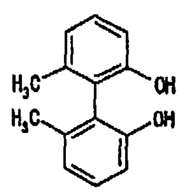
6
2,2'-dihydroxy-6,6'-dimethylbiphenyl (Biph)

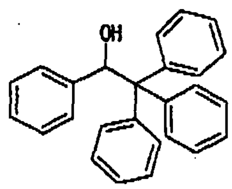
7
1,2,2,2-tetraphenyl ethanol (TrOH)

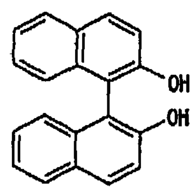
8
binaphthol (Binaph)

Conditions in the above analysis are shown below.

Analytical conditions

Mobile phase: n-hexane/2-propanol = 90/10 (v/v)
Flow rate: 1.0 ml/min
Column temperature: 25°C
Detection wavelength: 254 nm
Sample concentration: 0.1 mg/ml
Sample injection amount: 10 µl

Results of the analysis are shown in Table 4 below. Also Figs. 2 to 8 are chromatographs created thereby.

Table 4 :

| Effect of dope concentration on chromatographic performance | | | | | | | | |
|---|---|---|---|---|---|---|---|---|
| Sample | Dope conc. | t1 | t2 | k1' | k2' | α | N1 | N2 |
| 2 (t-SO) | 50mg/ml | 1.93 | 2.60 | 0.199 | 0.615 | 3.09 | 831 | 529 |
| | 75mg/ml | 2.03 | 3.05 | 0.301 | 0.955 | 3.17 | 2503 | 2591 |
| | 100mg/ml | 2.37 | 3.74 | 0.463 | 1.309 | 2.83 | 2241 | 1742 |

Table 4 : (continued)

| Effect of dope concentration on chromatographic performance | | | | | | | | |
|---|---|---|---|---|---|---|---|---|
| Sample | Dope conc. | t1 | t2 | k1' | k2' | α | N1 | N2 |
| 3 (TFAE) | 50mg/ml | 2.68 | --- | 0.665 | --- | 1.0 | --- | --- |
| | 75mg/ml | 2.92 | 3.16 | 0.872 | 1.023 | 1.17 | 1190 | 971 |
| | 100mg/ml | 3.19 | 3.49 | 0.969 | 1.154 | 1.19 | 930 | 752 |
| 4 (TR-base) | 50mg/ml | 2.71 | 2.92 | 0.683 | 0.814 | 1.19 | --- | --- |
| | 75mg/ml | 2.74 | 3.12 | 0.756 | 1,000 | 1.32 | 1976 | 1552 |
| | 100mg/mL | 3.02 | 3.53 | 0.864 | 1.179 | 1.36 | 1883 | 1616 |
| 5 (Bz) | 50mg/ml | 3.92 | 4.53 | 1.435 | 1.814 | 1.17 | --- | --- |
| | 75mg/ml | 5.06 | 5.96 | 2.244 | 2.821 | 1.26 | 2242 | 2151 |
| | 100mg/ml | 5.97 | 7.10 | 2.685 | 3.383 | 1.26 | 1254 | 1156 |
| 6 (Biph) | 50mg/ml | 3.42 | 5.13 | 1.124 | 2.186 | 1.94 | 436 | 280 |
| | 75mg/ml | 3.89 | 6.95 | 1.494 | 3.455 | 2.31 | 1698 | 1542 |
| | 100mg/ml | 4.51 | 7.86 | 1.784 | 3.852 | 2.16 | 1396 | 1057 |
| 7 (TrOH) | 50mg/ml | 3.62 | 6.05 | 1.248 | 2.758 | 2.21 | 365 | 217 |
| | 75mg/ml | 4.17 | 7.48 | 1.673 | 3.95 | 2.27 | 1518 | 1263 |
| | 100mg/ml | 4.83 | 9.29 | 1.981 | 4.735 | 2.39 | 1121 | 834 |
| 8 (Binaph) | 50mg/ml | 5.95 | --- | 2.696 | --- | 1.0 | --- | --- |
| | 75mg/ml | 7.72 | --- | 4.046 | --- | 1.0 | --- | --- |
| | 100mg/ml | 9.21 | --- | 4.685 | --- | 1.0 | --- | --- |

As apparent from the above analysis results, the higher the concentration of dope injected into the monolithic inorganic type porous body with pressure at the time of production of the separation column for optical isomers, the higher optical separation ability the obtained separation column for optical isomers has.

In this example, the columns were manufactured utilizing the high-performance liquid chromatography apparatus typically used for the separation of optical isomers. According to such methods, the dope can be more easily injected into the monolithic inorganic type porous body with pressure, and the separation column for optical isomers can be more easily manufactured.

## Claims

**1.** A separating agent for optical isomers which is used for separation of optical isomers in a sample, comprising:

an monolithic inorganic type carrier that is porous; and
at least one of a polysaccharide and a polysaccharide derivative supported on the monolithic inorganic type carrier.

**2.** The separating agent for optical isomers according to claim 1, wherein:

the polysaccharide derivative includes an optically active polysaccharide as a skeleton;
at least a part of a hydroxyl group and an amino group of the polysaccharide is substituted for a functional group which acts on the optical isomers in the sample; and
at least one of the polysaccharide and the polysaccharide derivative is supported on the monolithic inorganic type carrier by
filling the monolithic inorganic type carrier with a solution of polysaccharides comprising the at least one of the polysaccharide and the polysaccharide derivative and a solvent, and
being subjected to at least one of distilling off the solvent from the monolithic inorganic type carrier and replacing the solvent with another solvent therein.

**3.** The separating agent for optical isomers according to claim 1 or 2, wherein the monolithic inorganic type carrier

is mainly composed of silica.

**4.** The separating agent for optical isomers according to any one of claims 1 to 3, wherein the polysaccharide is one of cellulose and amylose.

**5.** The separating agent for optical isomers according to any one of claims 1 to 4, wherein the polysaccharide derivative is one of an ester derivative of a polysaccharide and a carbamate derivative of a polysaccharide.

**6.** A method of producing a separating agent for optical isomers which is used for separation of optical isomers in a sample and comprises: an monolithic inorganic type carrier that is porous; and at least one of polysaccharide and a polysaccharide derivative supported on the monolithic inorganic type carrier, the method comprising the steps of:

filling a solution of polysaccharides comprising the at least one of the polysaccharide and the polysaccharide derivative and a solvent into the monolithic inorganic type carrier; and
at least one of distilling off the solvent from the monolithic inorganic type carrier filled with the solution and replacing the solvent with another solvent therein.

**7.** The method of producing a separating agent for optical isomers according to claim 6, wherein:

the polysaccharide derivative includes an optically active polysaccharide as a skeleton; and
at least a part of a hydroxyl group and an amino group of the optically active polysaccharide is substituted for a functional group which acts on the optical isomers in the sample.

**8.** The method of producing a separating agent for optical isomers according to claim 6 or 7, wherein the step of filling the solution of the polysaccharides into the monolithic inorganic type carrier comprises injecting the solution into the monolithic inorganic type carrier under pressure.

**9.** The method of producing a separating agent for optical isomers according to any one of claims 6 to 8, wherein the monolithic inorganic type carrier is mainly composed of silica.

**10.** The method of producing a separating agent for optical isomers according to any one of claims 6 to 9, wherein the polysaccharide is one of cellulose and amylose.

**11.** The method of producing a separating agent for optical isomers according to any one of claims 6 to 10, wherein the polysaccharide derivative is one of an ester derivative of a polysaccharide and a carbamate derivative of a polysaccharide.

**12.** A separation column for optical isomers, comprising;

a column tube; and
the separating agent for optical isomers according to any one of claims 1 to 5 which is held in the column tube.

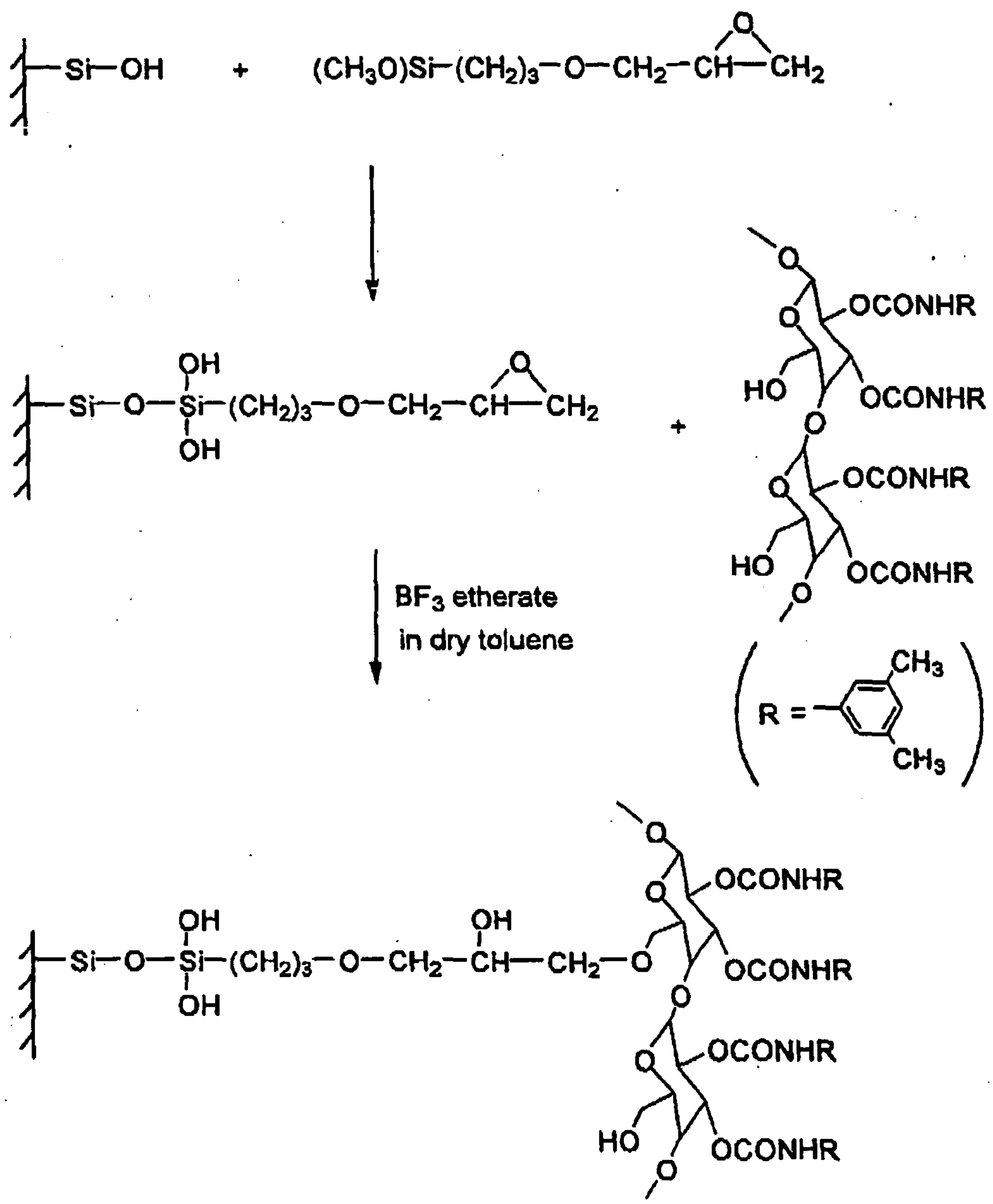


Fig. 1

Structural formula (2)

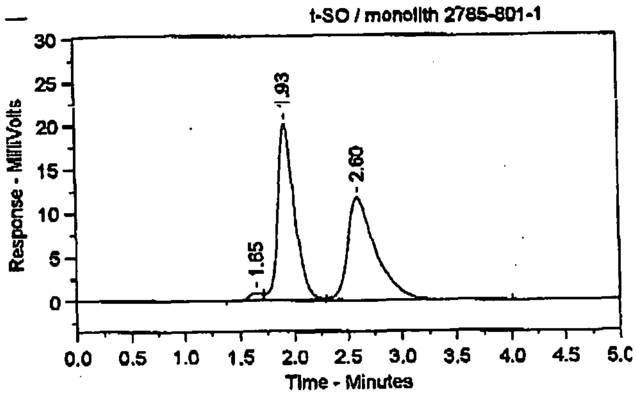


Example 5

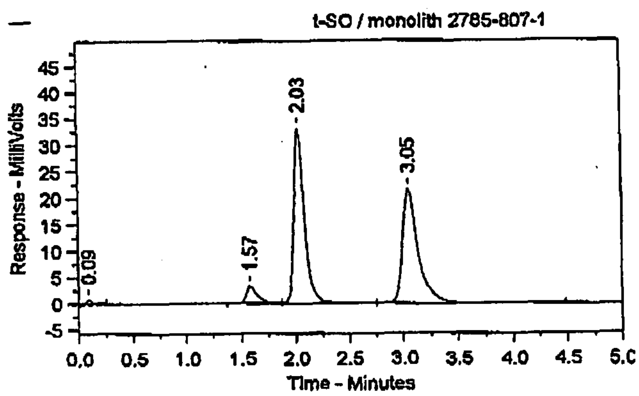


Example 6

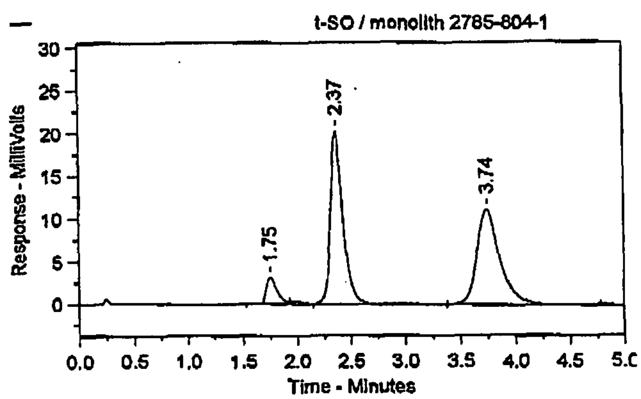


Example 7

Fig. 2

Structural formula (3)

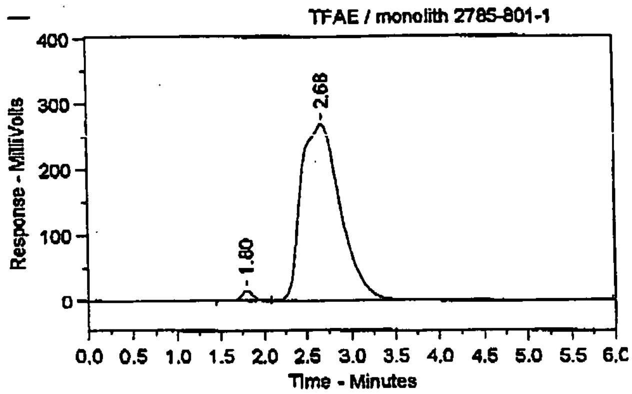


Example 5

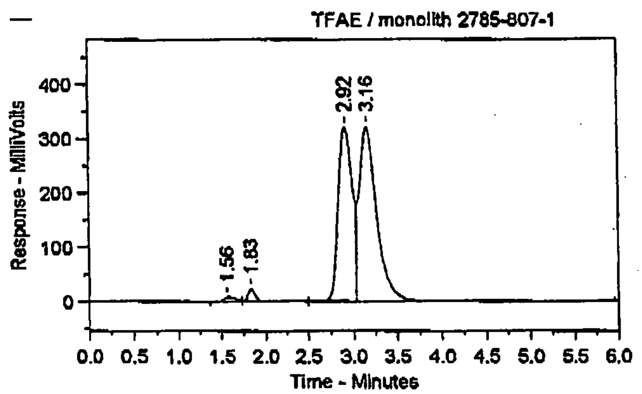


Example 6

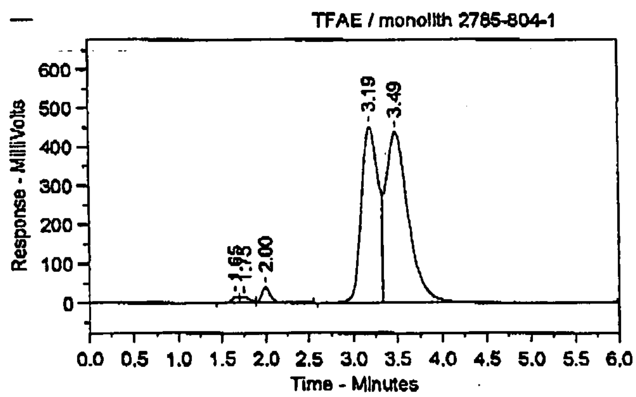


Example 7

Fig. 3

Structural formula (4)

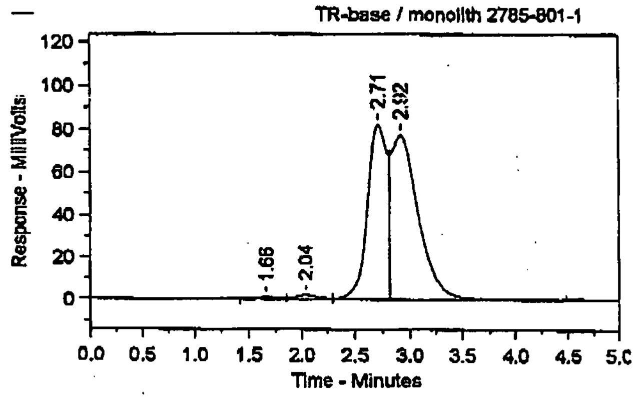


Example 5

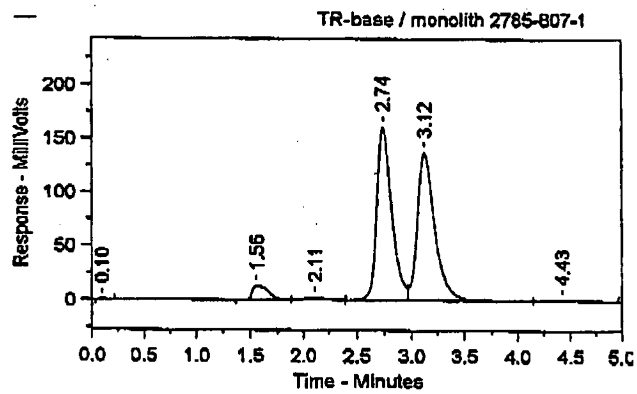


Example 6

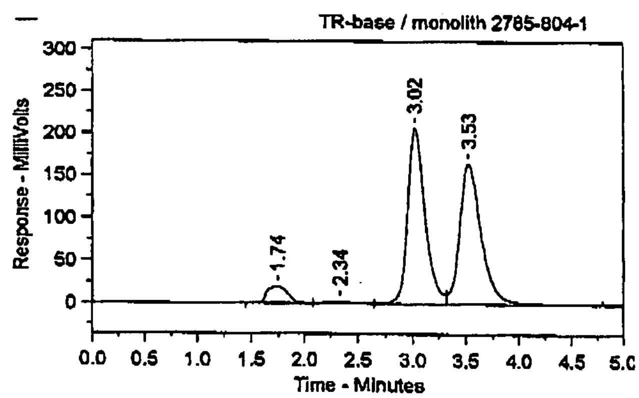


Example 7

Fig. 4

Structural formula (5)

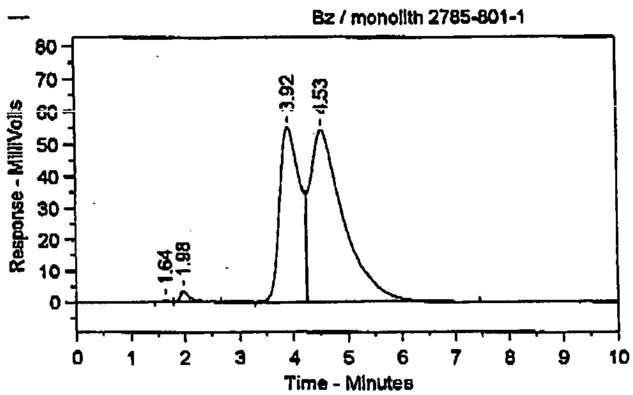


Example 5

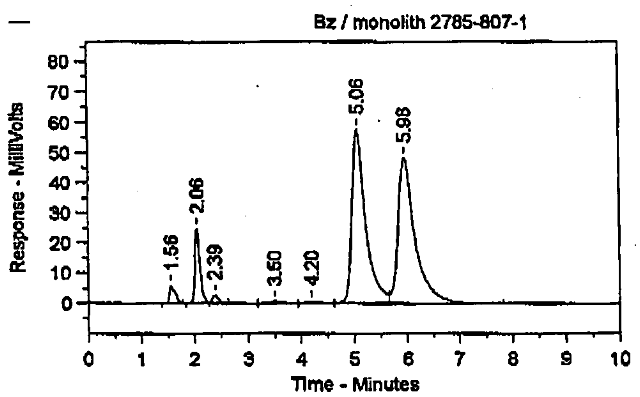


Example 6

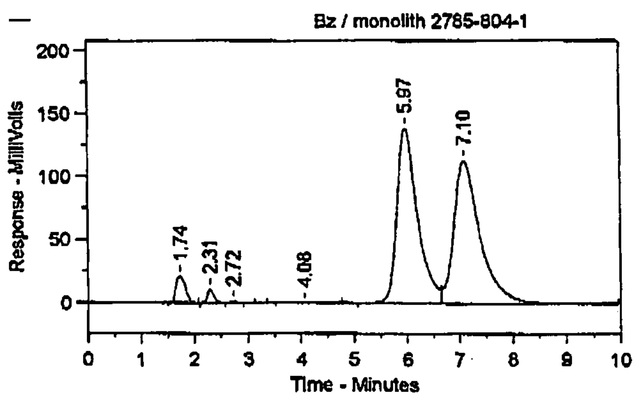


Example 7

Fig. 5

Structural formula (6)

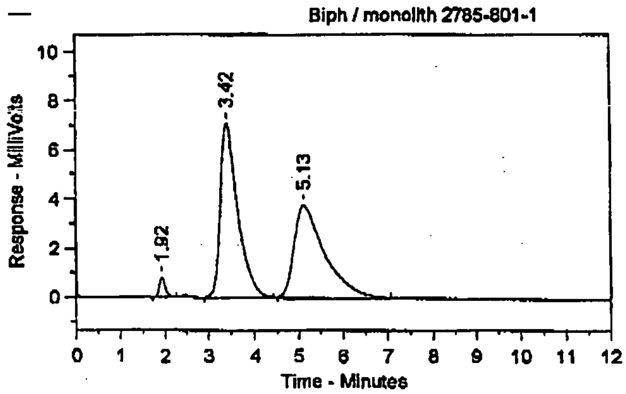


Example 5

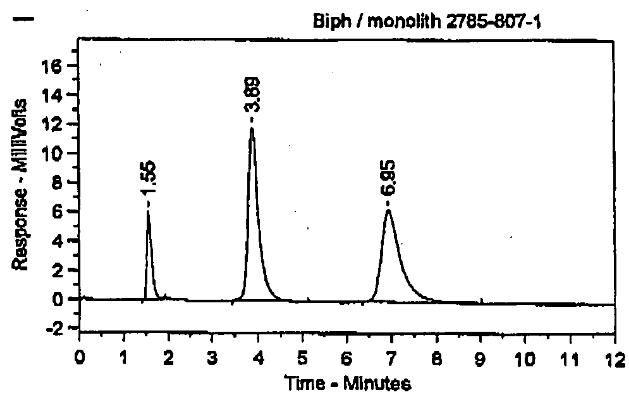


Example 6

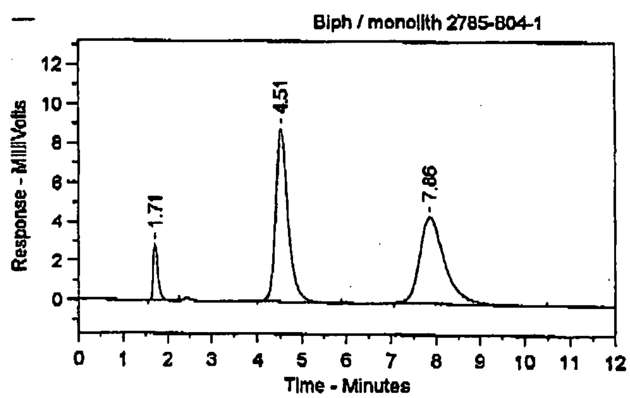


Example 7

F i g. 6

Structural formula (7)

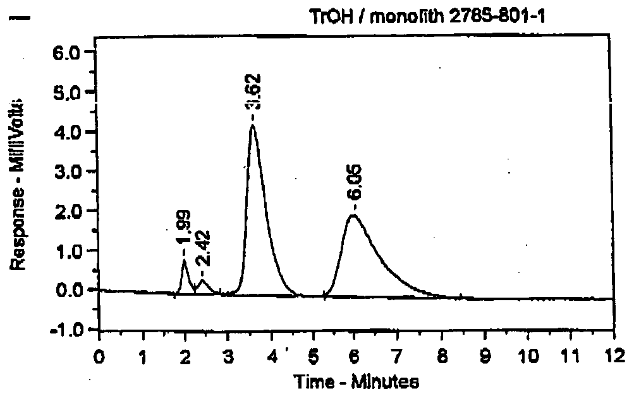


Example 5

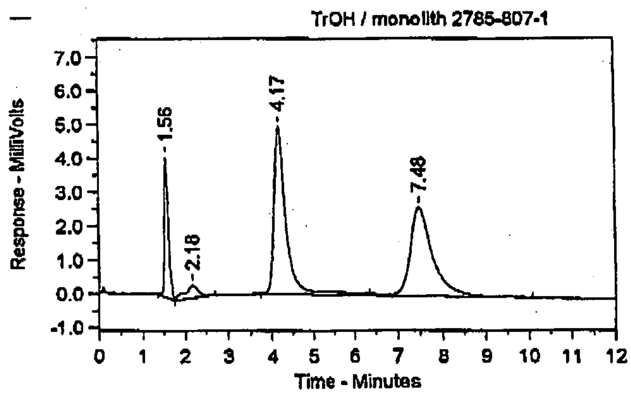


Example 6

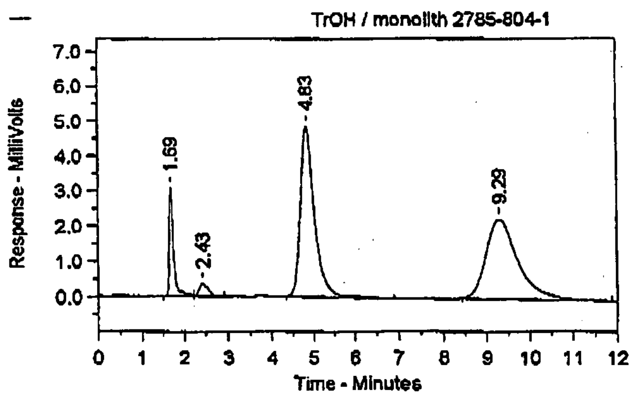


Example 7

Fig. 7

Structural formula (8)

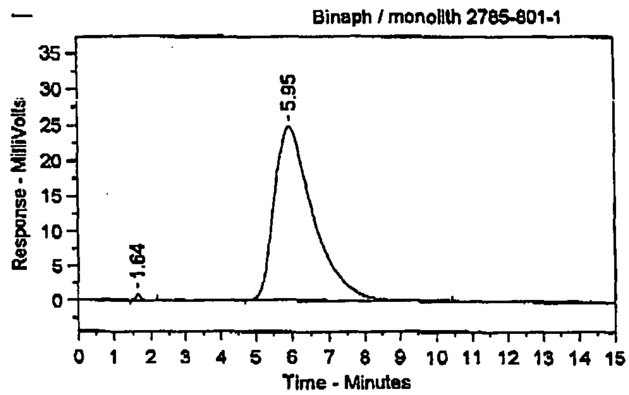


Example 5

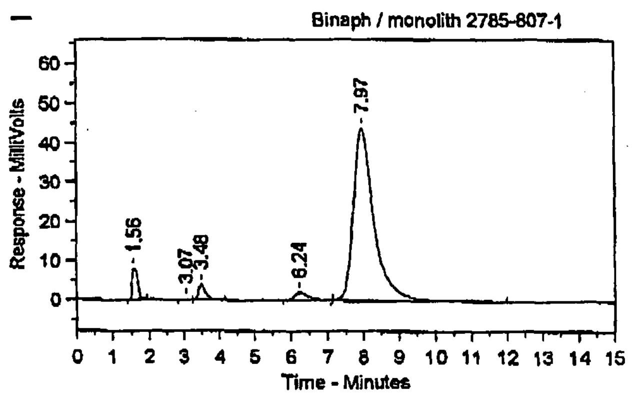


Example 6

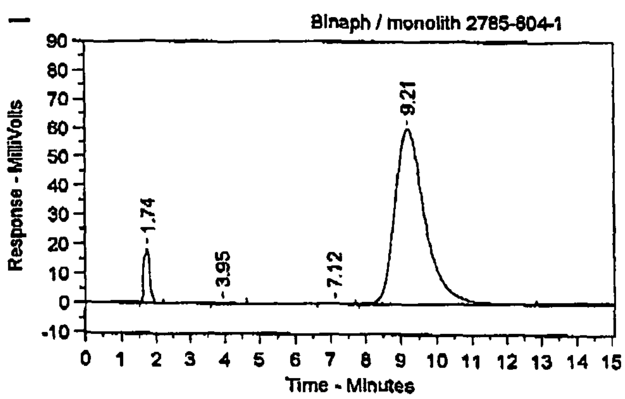


Example 7

F i g. 8